# EUROPÄISCHE PATENTANMELDUNG

(11) **EP 1 336 803 A2**
(43) Veröffentlichungstag der Anmeldung: **20.08.2003**
(21) Anmeldenummer: 03450036.3
(22) Anmeldetag: 13.02.2003
(51) Int. Cl.: F24F 7/08, F24F 11/00

(54) **Einrichtung zur Be- und Entlüftung von Räumlichkeiten**

(30) Priorität: 14.02.2002 AT 9102 U
(71) Anmelder: Mostböck Gessellschaft mbH, 1030 Wien (AT)
(72) Erfinder: Mostböck, Gerald, 1130 Wien (AT)
(74) Vertreter: Rippel, Andreas, Dipl.-Ing.

(57) **Zusammenfassung**

Die Erfindung betrifft eine Einrichtung zur Be- und Entlüftung von Räumlichkeiten (8, 8', 38, 38'), wobei in den zu belüftenden Raum (8, 8', 38, 38') eine Mischluft eingeblasen wird. Diese Mischluft wird gebildet aus der Abluft (entnommen aus dem zu belüftenden Raum), die anschließend gereinigt wird und frischer unbelasteter Luft (Außenluft). Durch diese Mischluft ist einerseits eine ausreichende Qualität der Zuluft gewährleistet, andererseits kann dadurch der Verlust von thermischer Energie herabgesetzt werden.

Das Mischungsverhältnis der Abluft mit der Außenluft ist temperaturabhängig, wobei dies durch ein Steuergerät (7, 37) erreicht wird. Das Steuergerät (7, 37) steuert ein System von Klappen (1, 11, 13; 31, 41, 43), die den Anteil der Außenluft an der Zuluft regeln. Desto kälter (wärmer) die Außenluft im Verhältnis zur Abluft ist, desto geringer ist der Anteil der Außenluft an der Zuluft, sodaß ein thermischer Verlust weitgehend vermieden wird.

Eine ausreichende Qualität der Zuluft wird zusätzlich dadurch erreicht, daß die beigemengte Abluft durch einen Abluftreiniger (9) respektive einen Luftreiniger (50) mittels Filtern gereinigt wird.

## Beschreibung

Die Erfindung bezieht sich auf eine Einrichtung zur Be- und Entlüftung von Räumlichkeiten.

Bei bekannten Einrichtungen zur Be- und Entlüftung von Räumlichkeiten wird die belastete Abluft aus dem zu belüftenden Raum entnommen und durch frische unbelastete Luft (Außenluft) ersetzt. Problematisch ist dabei, daß die Außenluft eine grob unterschiedliche Temperatur wie die Abluft aufweisen kann. Dies ist einerseits bei tiefen Außentemperaturen mit zusätzlichen Kosten verbunden, da die Außenluft erwärmt werden muß. Zusätzliche Kosten fallen auch bei zu hohen Außentemperaturen an, nämlich dann, wenn die Außenluft vor dem Einblasen in den zu belüftenden Raum abgekühlt werden muß.

Nachteilig ist außerdem, daß aufgrund einschlägiger gesetzlicher Bestimmungen jede nicht gereinigte Abluft nur über das Dach an die Außenwelt abgegeben werden darf. Dies hat zur Folge, daß ein umfangreiches Leitungssystem von dem zu belüftenden Raum (von den zu belüftenden Räumen) bis an das Dach vorgesehen werden muß.

Zur Senkung der Energiekosten werden bei herkömmlichen Einrichtungen zusätzliche Plattentauscher vorgesehen, über die die warme (kühle) Abluft geführt wird, sodaß sie einen Teil ihrer thermischen Energie an die ebenfalls über die Plattentauscher geführte Außenluft abgeben können. Als Nachteil bei derartigen Plattentauschern ist zu bemerken, daß diese einerseits großvolumig und mit relativ hohen Anschaffungskosten verbunden sind und andererseits nur ein Teil der thermischen Energie der Abluft an die Außenluft abgegeben wird.

Demgegenüber sind einfache Einrichtungen zum Be- und Entlüften von Räumlichkeiten bekannt: Diese Geräte sind ausschließlich für den Umluftbetrieb ausgelegt und saugen Abluft aus dem zu belüftenden Raum an. Mittels verschiedener Filter (Vorfilter, Aktivkohlefilter, Hepa Filter, etc.) wird die Abluft gereinigt und wieder an den zu belüftenden Raum abgegeben. Derartige Einrichtungen ergeben zwar keinen Wärmeverlust, die Reinigungsmöglichkeit der belasteten Luft ist aber beschränkt. Bei stärker kontaminierter Luft ergeben diese Einrichtungen daher eine zu geringe Reinigungswirkung.

Die Erfindung hat es sich daher zum Ziel gesetzt, eine Einrichtung zur Be- und Entlüftung von Räumlichkeiten zu schaffen, bei der einerseits nur ein geringer Verlust von thermischer Energie auftritt und andererseits eine nicht oder nur gering belastete Luft als Zuluft in den zu belüftenden Raum eingeblasen wird.

Erreicht wird dieses Ziel dadurch, daß in den zu belüftenden Raum eine Mischluft (Zuluft) -gebildet einerseits aus dem zu belüftenden Raum entnommener belasteter und anschließend gereinigter Luft (Abluft und Fortluft) und andererseits aus frischer unbelasteter Luft (Außenluft)- eingeblasen wird.

Durch dieses Vorsehen einer Mischluft werden die Vorteile eines reinen Umluftbetriebes mit den Vorteilen eines reinen Außenluftbetriebes kombiniert, wobei sich die Nachteile aus den verschiedenen Betriebsarten nur untergeordnet bemerkbar machen.

Um soweit als möglich frische und unbelastete Luft (Außenluft) ohne den Verlust von thermischer Energie einblasen zu können ist es zweckmäßig, wenn das Mischungsverhältnis der in den zu belüftenden Raum eingeblasenen Zuluft zwischen Abluft und Fortluft einerseits und Außenluft andererseits temperaturabhängig gesteuert wird.

Dies hat zur Folge, daß bei annähernd gleicher Temperatur zischen der Abluft und Fortluft einerseits sowie Außenluft andererseits ausschließlich oder mit hohen Anteilen Außenluft in den zu belüftenden Raum eingeblasen wird. Infolge der annähernd gleichen Temperatur erfolgt kein thermischer Verlust. Bei größeren Temperaturunterschieden (z.B. bei tiefen Außentemperaturen) wird das Mischungsverhältnis zu Gunsten der gereinigten Abluft geändert, das heißt, daß ein größerer Teil der Abluft als gereinigte Umluft dem zu belüftenden Raum wieder zugeführt wird. In der Praxis hat sich gezeigt, daß ein maximaler Anteil der Abluft von 75% zweckmäßig ist; mit anderen Worten bedeutet dies, daß ein Anteil von 25% von Außenluft an der Zuluft erhalten bleiben soll.

Bei einer vereinfachten Arbeitsweise der Erfindung (einzusetzen insbesonders in kühleren oder gemäßigteren Breiten) wird nur die Temperatur der Zuluft gemessen und bei einem Unterschreiten beispielsweise der 20° Celsius-Marke wird der Anteil der Außenluft schrittweise oder stufenlos je nach der Größe des Unterschreitens der 20° Celsius-Marke reduziert. Bei einem Erreichen einer niederen Temperatur (beispielsweise der 5° Celsius-Marke wird der Anteil der Außenluft mit rund 25% an der Zuluft begrenzt.

Der Energiespareffekt der gegenständlichen Einrichtung kann noch dadurch erhöht werden, daß ein Luftqualitätsfühler vorgesehen ist, der die Zu- und Abluftventilatoren abhängig vom Grad der Luftverschmutzung steuert. Dies bewirkt, daß beispielsweise bei einer geringen Luftverschmutzung die Zu- und Abluftventilatoren mit geringer Geschwindigkeit betrieben werden, bei einem höheren Luftverschmutzungsgrad wird hingegen die Geschwindigkeit der Ventilatoren gesteigert, sodaß es einerseits zu einer erhöhten Reinigung der Abluft und andererseits zur Zuführung einer größeren Menge von Außenluft kommt.

Nachstehend ist die Erfindung anhand zweier in den Zeichnungen dargestellter Ausführungsbeispiele gezeigt, wobei die Erfindung jedoch keinesfalls auf die gezeigten Beispiele beschränkt ist.
- Die Fig. 1 zeigt dabei in schaubildlicher Ansicht die erfindungsgegenständliche Einrichtung mit einem zentralisierten Abluftreiniger, der nicht im zu belüftenden Raum angeordnet werden muß;
- Fig. 2 zeigt in schaubildlicher Ansicht eine weitere Ausführungsvariante der erfindungsgemäßen Einrichtung, wobei dezentrale Luftreiniger im zu belüftenden Raum (in den zu belüftenden Räumen) vorgesehen sind.

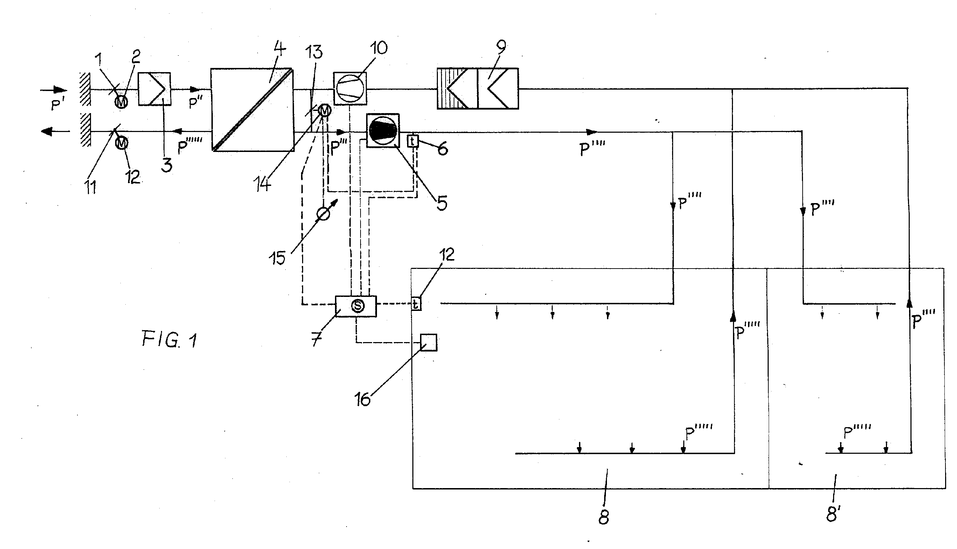

Gemäß der Fig. 1 wird Außenluft in Richtung des Pfeils p' angesaugt. Mittels Klappen 1 kann das nicht gewollte Einströmen von Außenluft während des Betriebsstillstandes der gegenständlichen Einrichtung oder zur Gewährleistung eines reinen Umluftbetriebes verhindert werden. Die Klappen 1 werden durch einen Klappenstellmotor 2 betätigt.

Um unerwünschte Partikel (beispielsweise Staubpartikel) und Schadstoffe aus der Außenluft zu filtern ist ein Außenluftfilter 3 vorgesehen, der die (an und für sich im hohen Grade unbelastete) Außenluft reinigt.

Über ein Kanalsystem, das üblicherweise aus verzinktem Stahlblech aufgebaut ist, gelangt die gereinigte Außenluft in Pfeilrichtung p" in ein Umluftteil 4, welches zusätzlich auch als Plattentauscher eingerichtet sein kann. Die Außenluft gelangt in Pfeilrichtung p''' zu einem Zuluftventilator 5, wobei in der Folge mittels eines Temperaturfühlers 6 die Temperatur der nunmehr als Zuluft zu bezeichnenden Luft gemessen wird. Die Daten dieses Temperaturfühlers 6 werden zu einem Steuergerät 7 übermittelt.

In Pfeilrichtung p"" wird die Zuluft in den zu belüftenden Raum 8 geleitet und an die Umgebungsluft des Raumes 8 und 8' abgegeben. Die Anzahl der Räume ist variabel, es ist sowohl eine erfindungsgemäße Einrichtung für nur einen Raum, wie auch für viele Räume realisierbar.

Aus dem Raum 8 wird in Richtung der Pfeile p''''' Abluft abgesaugt und in einen Abluftreiniger 9 verbracht. Zu diesem zentralen Abluftreiniger 9 wird die gesamte Menge an Abluft (beispielsweise aus dem Raum 8 und 8') geleitet.

Der Abluftreiniger 9 ist mit Filtern, insbesonders mit Aktivkohlefiltern und Partikelfiltern, ausgestattet, die es ihm ermöglichen die Abluft zu reinigen, sodaß sie (teilweise) als Zuluft wieder in die zu belüftenden Räume 8 und 8' (eventuell auch weitere Räume) geleitet werden kann. Der Transport der Abluft erfolgt unter Zuhilfenahme eines Abluftventilators 10.

Durch diese Reinigung der gesamten Abluft im Abluftreiniger 9 wird ermöglicht, daß diese sowohl teilweise als auch gesamt (Umluftbetrieb) dem zu belüftenden Raum wieder zugeführt werden kann. Zusätzlich wird durch diese Reinigung verhindert, daß die Fortluft (aus rechtlichen Gründen) über das Dach ausgeblasen werden muß. Gereinigte Luft darf nämlich auch direkt aus tiefergelegenen Räumen ausgeblasen werden, was eine erhebliche Kostensenkung der gegenständlichen Erfindung gegenüber herkömmlichen Anlagen bewirkt (Entfall von langen Rohrleitungen).

Im Anschluß an den Abluftventilator 10 wird ein Teil der Abluft über das Umluftteil 4 (eventuell mit Plattentauscher) in Richtung des Pfeils p""" an die Außenwelt abgegeben.

Sollte die gegenständliche Einrichtung nicht benützt werden (respektive bei einem reinen Umluftbetrieb) werden Klappen 11 durch einen Klappenstellmotor 12 geschlossen.

Der Temperaturfühler 6 mißt die Temperatur der Zuluft, wobei diese Temperatur für das Steuergerät 7 ausschlaggebend für das Mischungsverhältnis der Abluft mit der Außenluft ist. Desto größer die Temperaturdifferenz zwischen den Temperaturfühler 6 und einem Temperaturfühler 12 ist, desto höher ist der Anteil der gereinigten Abluft an der Zuluft. Dies wird dadurch erreicht, daß die Klappen 13 unter Zuhilfenahme des Klappenstellmotors 14 mehr geöffnet werden, sodaß sich der Anteil Abluft an der Zuluft erhöht. Unterstützt wird dies dadurch, daß unter Zuhilfenahme der Steuerung 7 die Klappen 1 mittels des Klappenstellmotors 2 im selben Ausmaß geschlossen werden wie die Klappen 13 geöffnet werden.

Bei einer annähernd gleichen Temperatur -gemessen an den Temperaturfühlern 6 und 12- kann der Anteil der Außenluft an der Zuluft gesteigert werden, dies geschieht dadurch, daß die Klappen 13 in einem höheren Maße geschlossen werden, sodaß sich die Abluft nicht mit der Zuluft vermengen kann. Dies hat zur Folge, daß die Abluft ins Freie entweichen muß. Auch dieser Effekt kann dadurch verstärkt werden, daß die Klappen 11 (unter Zuhilfenahme des Klappenstellmotors 12) geöffnet werden, sodaß ein ungehinderter Austritt ins Freie stattfinden kann.

Als weitere Ausführungsvariante wäre denkbar, daß der Temperaturfühler 6 vor dem Mischen der Abluft mit der Außenluft angeordnet ist.

Zur Erreichung einer immer optimalen Qualität der Zuluft ist ein Potentiometer 15 angeordnet, das einen Mindestaußenluftanteil steuert. Dieser Mindestaußenluftanteil sollte 25% der Zuluft nicht unterschreiten, da anderenfalls eine optimale Qualität der Zuluft nicht gewährleistet ist. Durch den Mindestluftanteil von 25% ist aber beispielsweise bei sehr niedrigen Außentemperaturen gewährleistet, daß nicht sehr kalte Luft eingeblasen wird, da eine Mischung mit gereinigter Abluft (75%) stattfindet.

Zusätzlich ist ein Luftqualitätsfühler 16 vorgesehen, der die Geschwindigkeit des Zuluftventilators 5 und Abluftventilators 10 beeinflußt: Unter Zuhilfenahme der Steuerung wird bei einer höheren Verschmutzung eine höhere Geschwindigkeit der Ventilatoren gewählt, sodaß einerseits eine größere Reinigung durch den Abluftreiniger 9 erreicht wird und andererseits eine größere Menge an Außenluft eingeblasen wird.

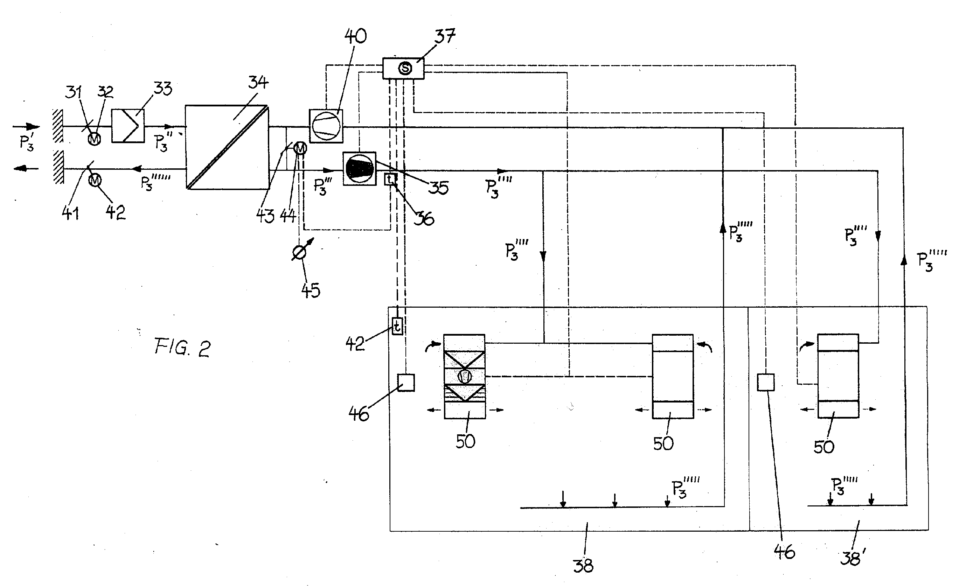

Gemäß der Fig. 2 wird Außenluft entlang der Pfeilrichtung p' angesaugt. Klappen 31 samt Klappenstellmotor 32, ein Außenluftfilter 33, ein Umluftteil 34 (möglicherweise mit Plattentauscher) ein Zuluftventilator 35 und ein Temperaturfühler 36 sind äquivalent wie in Fig. 1 angeordnet.

Entlang der Pfeilrichtung P₃'''' wird die Zuluft über einen Luftreiniger 50 in den zu belüftenden Raum 38 (eventuell 38') abgegeben. Der Luftreiniger ist mit Partikelfilter und Aktivkohlefilter ausgestattet, wodurch eine ausreichende Reinigung von nicht übermäßig belasteter Luft gewährleistet ist. Entlang der Pfeilrichtung P₃''''' wird die Abluft aus dem zu belüftenden Raum 38 mit Hilfe eines Abluftventilators 40 abgesaugt. Analog des bei der Fig. 1 beschriebenen Verfahrens wird das Mischungsverhältnis der Abluft mit der Außenluft temperaturabhängig durch ein Steuergerät 37 durch die Klappenstellung von Klappen 43 (betätigt durch einen Klappenstellmotor 44) festgelegt. Desto größer die Temperaturdifferenz zwischen dem Temperaturfühler 35 und einem Temperaturfühler 42 ist, desto größer ist der Anteil der Abluft an der Zuluft. Bei einer annähernd gleichen Temperatur kann der Anteil der Außenluft gesteigert werden, ohne daß es zu einem Verlust von thermischer Energie kommt.

Unter Zuhilfenahme eines Potentiometers 45 wird erreicht, daß der Anteil der Außenluft an der Zuluft 25% nicht unterschreitet, sodaß immer eine ausreichende Qualität der Zuluft gewährleistet ist.

Mittels eines Luftqualitätsfühlers 46 wird unter Zuhilfenahme der Steuerung 47 die Geschwindigkeit des Zuluftventilators 35 und des Abluftventilators 40 gesteuert. Dies bedeutet, daß bei höherer Verschmutzung der Luft eine höhere Geschwindigkeit der Ventilatoren gefahren wird.

Wie bereits oben ausgeführt sind auch andere Ausführungsvarianten denkbar: So wäre es möglich die Abluft sofort nach dem Ansaugen aus dem zu belüftenden Raum mittels dezentralen Luftreinigern zu reinigen. Dies hätte zur Folge, daß nicht die Zuluft kurz vor dem Einblasen gereinigt wird, sondern die Abluft kurz nach dem Absaugen aus dem zu belüftenden Raum. Auch wäre es möglich -und insbesonders in größeren Anlagen auch zweckmäßig- mehrere Zuluft- und Abluftventilatoren vorzusehen.

Wie bereits dargelegt, kann bei einer vereinfachten Arbeitsweise der Erfindung (einzusetzen insbesonders in kühleren oder gemäßigteren Breiten) nur die Temperatur der Zuluft gemessen werden und bei einem Unterschreiten beispielsweise der 20° Celsius-Marke wird der Anteil der Außenluft schrittweise oder stufenlos je nach der Größe des Unterschreitens der 20° Celsius-Marke reduziert. Bei einem Erreichen einer niederen Temperatur (beispielsweise der 5° Celsius-Marke wird der Anteil der Außenluft mit rund 25% an der Zuluft begrenzt.

Darüber hinaus ist auch die Anzahl der zu belüftenden Räume nicht begrenzt: Bei einer entsprechenden Dimensionierung der erfindungsgegenständlichen Einrichtung kann sowohl lediglich ein Raum als auch mehrere bis viele Räume belüftet werden.

## Patentansprüche

1. Einrichtung zur Be- und Entlüftung von Räumlichkeiten (8, 8', 38, 38') **dadurch gekennzeichnet, daß** in den zu belüftenden Raum (8, 8', 38, 38') eine Mischluft (Zuluft), gebildet einerseits aus dem zu belüftenden Raum (8, 8', 38, 38') entnommener, belasteter und anschließend gereinigter Luft (Abluft und Fortluft) und andererseits aus frischer unbelasteter Luft (Außenluft), eingeblasen wird.

2. Einrichtung nach Anspruch 1 **dadurch gekennzeichnet, daß** das Mischungsverhältnis der in den zu belüftenden Raum (8, 8', 38, 38') einzublasenden Zuluft zwischen der Abluft und Fortluft einerseits und Außenluft andererseits temperaturabhängig gesteuert wird.

3. Einrichtung nach Anspruch 1 und 2 **dadurch gekennzeichnet, daß** ein Luftqualitätsfühler (16, 46) vorgesehen ist, der die Zu- und Abluftventilatoren (5, 10; 35, 40) abhängig vom Grad der Luftverschmutzung steuert.
